# EUROPEAN PATENT APPLICATION

(11) **EP 1 515 524 A1**
(43) Date of publication of application: **16.03.2005**
(21) Application number: 03720970.7
(22) Date of filing: 28.04.2003
(51) Int. Cl.: H04M 1/02

(54) **ELECTRONIC APPARATUS**

(30) Priority: 14.06.2002 JP 2002174185
(71) Applicant: Yamane, Mitoku, Toyota-gun Hiroshima 729-0412 (JP)
(72) Inventor: Yamane, Mitoku, Toyota-gun Hiroshima 729-0412 (JP)
(74) Representative: Skone James, Robert Edmund
(86) International application number: PCT/JP2003/005469
(87) International publication number: WO 2003/107632

(57) **Abstract**

The present invention provides a cell phone in which the operability of the character-input button such as dial buttons is improved. Two different phonetic or Latin letters are assigned to the first end- and second end-pressing points of character-input buttons which also function as dial buttons. A single pressing of the first end of the character-input key inputs the phonetic letter (e.g. A) assigned to the first end while a single pressing of the second end inputs the phonetic letter (e.g. B) assigned to the second end. These character-input keys are tilted in the longitudinal direction.

## Description

### TECHNICAL FIELD

The present invention relates to an electronic apparatus with character input capability.

### BACKGROUND TECHNOLOGY

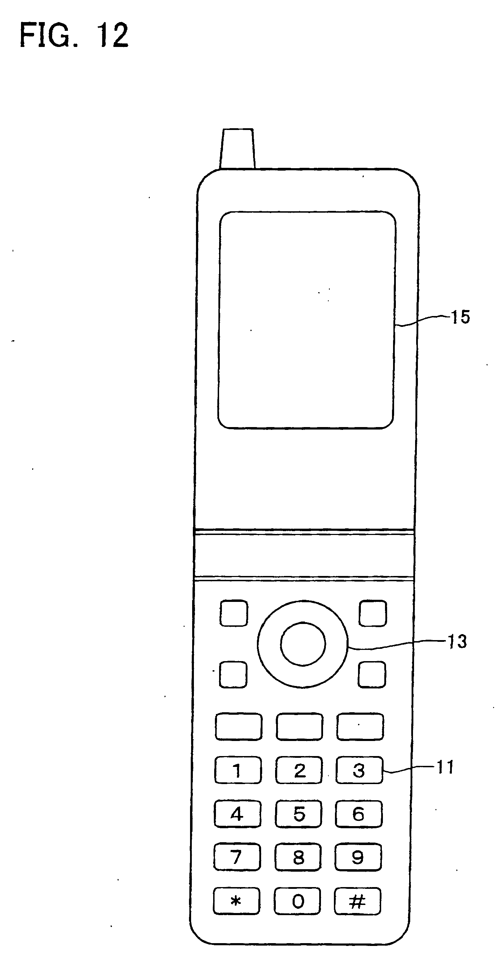

The trend in cell phones is to have multiple functions, and more specifically, cell phones of the type that can send messages and also store name and phone number to provide a telephone directory function have been launched in the market. To take advantage of these functions, it is necessary that characters can be input into the cell phone. Figure 12 is a top view showing the exterior of a cell phone of conventional technology. A plurality of numeral keys 11 representing "1" ∼ "9", "*", "0", "#", and scroll keypad 13, and the like, are arranged on the cell phone.

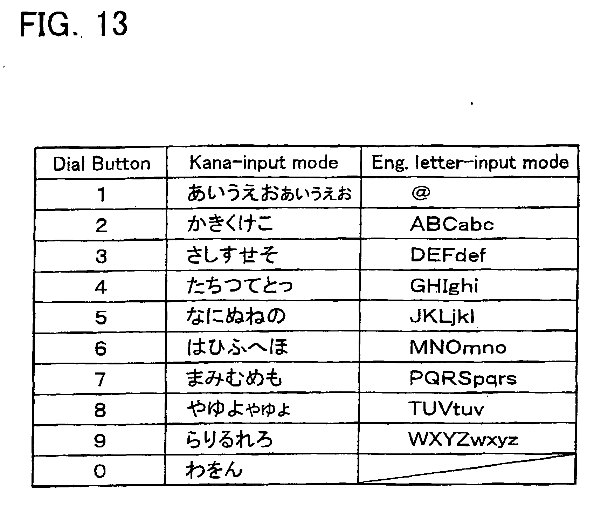

The demand for reduction in size limits the number of operating keys that can be arranged on the cell phone. To overcome this limitation, the keys 11 are made to function as character-input keys as well wherein multiple characters are assigned to each of the keys 11 for inputting the characters, for example, as illustrated in Figure 13. Note that voiced sounds, p-consonants, double consonants, contracted sounds, a macron, and the like, which are not illustrated in the figure, are also represented by one of the keys 11 such that an user can enter messages in a kana-input mode [in which the two parts of the Japanese Kana syllable characters, Hiragana and Katakana, are entered].

If an user intends to enter a character selected from those assigned to the keys 11, he or she can enter a character by pressing a key 11 as many times as required. For example, if the user presses the "2" on a key 11 only once in the data input mode, " 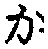 " expressed in Hiragana is input and "ka" in the form of Hiragana appears on display 15. If the user presses the "2" twice, " 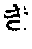 " expressed in Hiragana is input and " 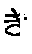 " appears in the form of Hiragana on display 15. In the same manner, if the user presses the "2" three, four, or five times, "< ", " 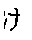 ", or " 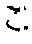 ", are input in Hiragana and "< ", " 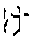 ", or " 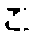 " appear in the form of Hiragana on display 15.

In the cell phone of conventional technology, any kana character or Latin letter [referred to below as "phonetic letter"] except numerals can be entered by pressing a key 11 as many times as required. As a result, a user must press a key 11 multiple times to enter a character in many cases. For example, the user must press key 11 five times to enter " 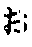 ", " 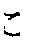 " or " 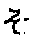 " , which is a lengthy process. In addition, the user must go through the frustrating experience because he or she will often press a key 11 wrong number of times or enters a wrong character until he or she is familiar with the operation.

To overcome the previously described problems, a cell phone of the type in which multiple contacts are provided to each key of the keypad (or ten key) and different characters are assigned to each of the contacts such that different characters can be entered in accordance with the pressing point (e.g. Figure 1 of Japanese unexamined patent application publication (Kokai) No. 2000-165499) In this disclosure, a user can enter a character by pressing a single key.

In the keys or dial buttons disclosed in the above patent publication, in which different characters are entered in accordance with the pressing points, unintended characters may be entered if it is not easy to operate the keypad. This is particularly likely to happen with a hand-held electronic apparatus such as a cell phone having small keys.

The present invention carefully studied the problems and intends to provide an electric device having character-input buttons such as dial buttons with an improved operability.

### DISCLOSURE OF THE INVENTION

The electronic apparatus of the present invention comprises: an input means having character-input keys assigned to a matrix configuration wherein the character-input keys having different vertical and horizontal widths; the longitudinal axes of the character-input keys being tilted in a top view; the character-input keys having first and second contacts to input different characters; the first and second contacts being provided on first and second ends of the character-input keys in the longitudinal direction; and a display means for displaying the characters input by the character-input keys of the input means.

According to the present invention, contacts for inputting different characters are assigned to the first and second ends of character-input keys in the longitudinal direction. For this reason, a character can be entered by pressing a single character-input key without increasing the number of character-input keys. In addition, the longitudinal axes of the character-input keys are tilted. Hence, the character-input buttons can be enlarged in the same direction and the space required for pressing character-input keys can be ensured within the narrow space that is available for the key arrangement on the keypad.

In the electronic apparatus of the present invention, the longitudinal axes of the character-input keys may be tilted from northeast to southwest. This configuration allows a right-handed user to move his or her thumb nearly horizontally to press the character-input keys with his or her right hand, thereby improving the operability of the keys.

Also in the electronic apparatus of the present invention, the characters assigned to each of the ends of the character input keys may be phonetic letters. In this way, each phonetic letter can be entered by pressing a single character-input key. In other words, phonetic letters can be entered in the same manner as they are entered into a computer via a keyboard. Many people are familiar with the keyboard operation required for inputting characters to a personal computer. Therefore, they do not need to learn how to enter characters for the electronic apparatus of the present invention.

The electronic apparatus of the present invention can have a Latin letter-Japanese [character] conversion means for converting the Japanese words expressed by using phonetic letters, which are entered into the electronic apparatus using the character-input keys, to the Japanese words. The use of this conversion means allows a user to input Japanese words using the Latin letters in the same manner as he or she inputs characters to a personal computer using the same phonetic letters via a keyboard.

The electronic apparatus of the present invention may further comprise third contacts that are capable of contacting the first contacts and second contacts provided on the first and second ends of the character-input keys; and third characters which are different from those assigned to the first and second ends are assigned to the center of the character-input keys wherein the first contact and second contact touch the third contact, thereby inputting a third character assigned to the center of the character-input key. According to this invention, pressing a single character-input key can enter multiple characters by taking advantage of the designation of characters assigned to the center, first end, and second end of the character-input key.

In the electronic apparatus of the present invention, the characters assigned to the center of the character input keys may be numerals. In this way, a user can enter a numeral without switching from the present mode in which phonetic letters assigned to the first and the second end of the character-input key are entered. An efficient method of entering characters is thus obtained.

The electronic apparatus of the present invention can be applied to any hand-held electronic apparatus.

### BRIEF DESCRIPTION OF THE DRAWINGS

Figure 1 is a top view illustrating the external appearance of the cell phone associated with Embodiment 1 of the present invention.
Figure 2 is a diagram illustrating characters assigned to character-input keys of the cell phone associated with Embodiment 1.
Figure 3 is a cross-sectional schematic diagram of an example of the character-input key configuration of the cell phone of Embodiment 1.
Figure 4 is a cross-sectional schematic diagram of a dome switch being pressed at the first end of the character-input key.
Figure 5 is a cross-sectional schematic diagram of a dome switch being pressed at the second end of the character-input key.
Figure 6 is a flow chart illustrating an example of the procedure in which characters are input using the cell phone associated with Embodiment 1 of the present invention.
Figure 7 is a diagram illustrating an example of the hardware configuration that can realize the cell phone associated with Embodiment 1.
Figure 8 is a top view illustrating the external appearance of the cell phone associated with Embodiment 2 of the present invention.
Figure 9 is a diagram illustrating characters assigned to character-input keys of the cell phone associated with Embodiment 2.
Figure 10 is a cross-sectional schematic diagram illustrating the character-input key of Embodiment 2 wherein the center of the key is pressed.
Figure 11 is a top view illustrating the external appearance of a fixed phone associated with an alternate example of Embodiment 2 of the present invention.
Figure 12 is a top view illustrating the external appearance of a cell phone of conventional technology in which characters can be input.
Figure 13 is a diagram illustrating the characters assigned to the keys of a cell phone of conventional technology.

### DESCRIPTION OF THE PREFERRED EMBODIMENTS

### EMBODIMENT 1

The cell phone associated with Embodiment 1 of the present invention is described herein with reference to the drawing. A user can enter any of the 26 phonetic letters by pressing a single character-input key in the cell phone of Embodiment 1 without significantly increasing the number of keys. Therefore, the number of character-input keys that must be pressed to enter characters (an e-mail message or character data and the like) into the cell phone of the present invention is substantially less than those used in a cell phone of conventional technology. Accordingly, the time required for entering all the necessary characters can be reduced. In the cell phone of Embodiment 1, Japanese words can be entered by using the Latin letters in the same manner that a user enters characters to a computer using a keyboard. Many people are familiar with the keyboard operation required for inputting data to a personal computer. Therefore, they do not need to learn how to enter characters for this invention.

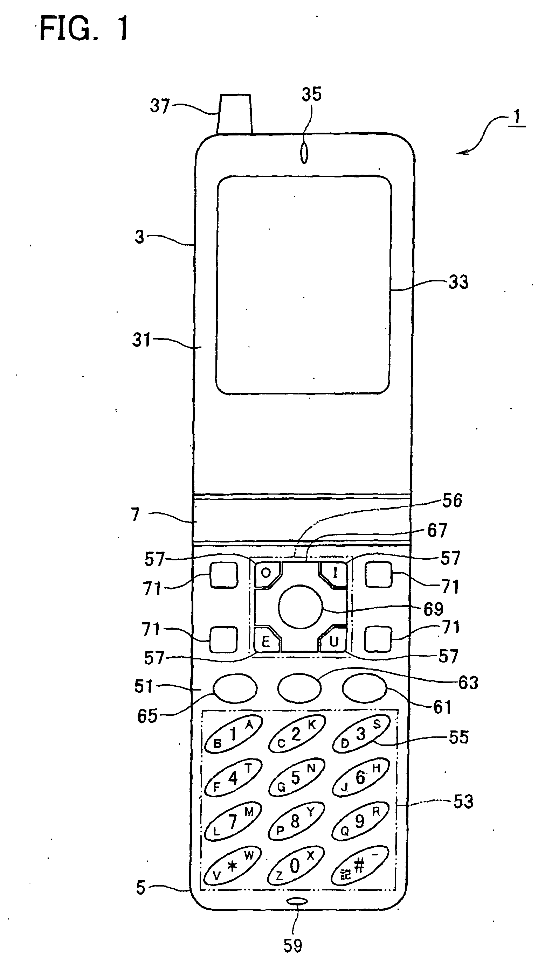

Figure 1 is a top view illustrating the external appearance of the cell phone of Embodiment 1. The hand-held electronic apparatus of the present invention can be applied to a cell phone but also to a personal hand-held phone system (PHS) or a personal digital assistant (PDA).

The cell phone 1 is of the folding type constructed with a first and a second rectangular parallelepiped casing 3, 5, connected with a hinge 7. The cell phone 1 is folded in such a manner that surface 31 of first casing 3 and surface 51 of second casing 5 face each other.

Display 33 is an example of a display means arranged on surface 31 of first casing 3. The phone number entered into cell phone 1, or the contents of a message sent or received thereof, or the like, will appear on display 33. An aperture 35 for a speaker is formed on the upper end of surface 31 of display 33. A speaker, through which another party's voice or a received melody is beard, is embedded in first casing 3 such that the voice coming from a speaker propagates to the outside through aperture 35 to be heard. An antenna capable of being pulled out is also housed in first casing 3, and tip portion 37 of the antenna is exposed to the outside through the upper end portion of first casing 3.

Twelve keys 55, an example of the input means, are arranged in a matrix of 3 columns x 4 rows in region 53, which is approximately the lower half of surface 51 of second casing 5 wherein "1" ∼ "9", "*", "0", and "#" are each assigned to a key 55 therein. The surface of each of the keys 55 is shaped in an elongated oval. These twelve keys 55 are arranged in region 53 in such a manner that the long axes of the oval are tilted, more preferably, the axes point from northeast to southwest as illustrated in Figure 1.

Numerals "1" ~ "9", "*", "0", and "#" are each assigned to the center of the surface of a key 55. In addition, the Latin letters and the like to be input are assigned to the surface of the first and second ends of the keys in the longitudinal direction. More specifically, cell phone 1 has character-input modes comprising the numeral-input mode, the Kana-input mode in which Japanese words are entered [phonetically] using Latin letters (hereinafter referred to as the "alphabetic Kana-input mode"), and the English-input mode [in which English words are entered using phonetic letters]. For use in these modes, a numeral or phonetic letter excluding the symbol "#" is assigned to each of the character-input keys 55 as shown in Table 2. Two different phonetic letters are assigned to each key 55. Although the symbol "#" is not listed in the table, a special symbol is assigned to [*] to be utilized during the character input operation.

The above method of assigning two phonetic letters to every key 55 [, eleven in total,] cannot accommodate all 26 phonetic letters. In the alphabetic Kana-input mode, a user must press those keys 55 required to express Japanese vowels many times, and therefore, it would be convenient if the consonant keys (keys 55 in this case) could be differentiated from the Japanese vowel keys. To achieve this objective, four keys used to express Japanese vowels are arranged in region 56, which is different from region 53, as an example of an input means, wherein "I", "U", "E", and "O" are included in the four keys 57 of the Japanese vowel group but "A" is excluded therefrom.

In other words, [as illustrated in Figure 1] in rectangular region 56 in the center of surface 51 above region 53, four keys 57 are arranged at the four corners of region 56. Each key 57 is labeled and assigned to represent "I", "U", "E", or "O" such that "I", "U", "E", or "O" can be entered in either the alphabetic Kana-input mode or the English-input mode. In Embodiment 1, any phonetic letter A through Z may be assigned to keys 55 or 57.

The "A" key is not arranged in region 56 for reasons of the layout design for the character-input keys and operating keys. The present design may be changed in such a manner that five keys are arranged in a region different from region 53 to accommodate "A", "I", "U", "E", and "O". Alternatively, "A", "I", "U", "E", and "O" may be arranged, for example, around the "5", "8", "4", and "6" keys in the center of region 53 because these vowels are very frequently used in entering a message.

A cross-shaped operating key 67 is arranged in region 56 and functions as a scroll-key. A through-hole is formed in the middle of operating key 67 through which another operating key 69 is provided such that it operates as a function key.

Between regions 56 and 53 on surface 51 of second casing 5 are arranged three operating keys 61, 63, and 65 in a horizontal manner. In the English-input mode, a user can switch from uppercase [mode] to lowercase [mode] or vice versa for phonetic letters that appear on display 33 by pressing operating key 61. In the alphabetic Kana-input mode, the user can press operating key 61 to switch from Hiragana to Katakana or vice versa such that Hiragana or Katakana characters will appear on display 33.

By pressing operating key 63, the user can switch from numeral mode to alphabetic Kana mode, and to English mode in that order. The operation of the operating key 65 does not relate to Embodiment 1, and therefore is not described herein. Also, four operating keys 71 are arranged on surface 51 for such operations as to "hang up", "pick up" the phone, "read memory", and to "retrieve the incoming or outgoing communication history".

Aperture 59 for a microphone is provided on the lower end of surface 51 in region 53. The voice of the calling party is transmitted to the microphone embedded inside second casing 5 through microphone aperture 59 during conversation.

Now, in cell phone 1, two different phonetic letters are assigned to each of the character-input keys 55 that also function as dialing buttons wherein the two different phonetic letters correspond to different pressing positions on a single key 55. In this way, even though the demands for a reduction in size limit the number of character keys that can be arranged on a cell phone, a user can enter the phonetic letter assigned to the key [of his or her choice] by pressing a single character-input key 55. Character-input keys 55 have the following configuration to provide this convenience.

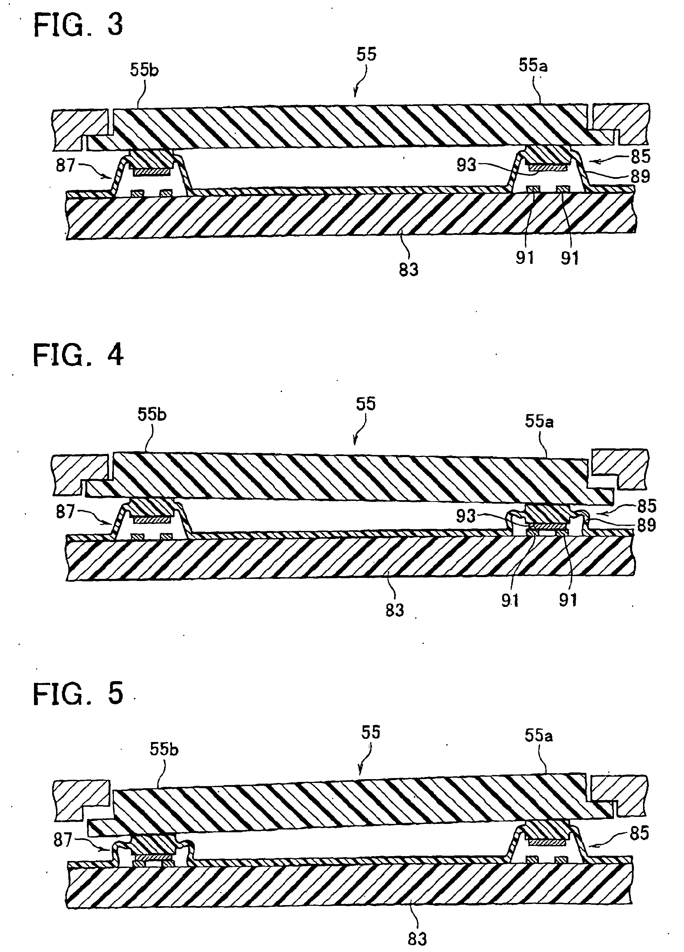

Figure 3 is a cross-sectional schematic diagram illustrating an example of the configuration of character-input key 55. Two dome switches 85, 87 are arranged at a distance on printed circuit board 83 embedded in second casing 5 [as illustrated in Figure 1]. Dome switch 85 supports the first longitudinal end 55a of a character-input key 55; dome switch 87 supports second end 55b thereof.

Dome switches 85, 87 have a rubber dome 89. A pair of fixed contacts 91 is attached to printed circuit board 83. The bottom of rubber dome 89 is fixed onto printed circuit board 83 such that fixed contacts 91 are positioned in the space defined by rubber dome 89. Movable contact 93 is attached to rubber dome 89 in such a manner that it faces fixed contacts 91 at a given gap.

The operation of character-input keys 55 in the above configuration is described herein with reference to the "1" key. First, the key operation in alphabetic Kana-input mode and English mode are described. If a user of cell phone 1 presses first end 55a, to which "A" is assigned, rubber dome 89 is pushed and movable contact 93 touches fixed contacts 91 as illustrated in Figure 4, thereby turning on dome switch 85. Then, "A" appears on display 33 as shown in Figure 1. On the other hand, if a user presses second end 55b, to which "B" is assigned, dome switch 87 is turned on as illustrated in Figure 5, and "B" appears on display 33. Note that if a user presses the central portion of character input key 55; both dome switches 85 and 87 are turned on. However, any input is prohibited under this situation.

In contrast, in numeral-input mode, "1" appears on display 33 in any of the following situations: first end 55a of character-input key 55 is pressed and dome switch 85 is turned on; or, second end 55b thereof is pressed and dome switch 87 is turned on; or, the central portion thereof is pressed and both dome switches 85, 87 are turned on.

As described, the use of dual-contact switches or dome switches 85, 87, that are actuated upon pressing of character-input key 55, allows a single character-input key 55 to input two different Latin letters that are assigned to different pressing positions. As a result, according to Embodiment 1, any Latin letter can be entered by pressing a single character-input key with a minimum increase in the number of character-input keys. Hence, the user can enter a Latin letter without counting the number of times he or she must press the target character-input key to enter the desired phonetic letter.

The character-input keys 55 are also dialing buttons that allow dialing using the character-input keys 55. Hence, the number of keys required for messaging and dialing can be minimized, and the size of the cell phone can be reduced to meet the market demand.

Also, as illustrated in Figure 1, the longitudinal axes of the character-input keys 55 that are also dialing buttons are tilted in region 53. This allows keys 55 to be elongated in the longitudinal direction. In this way, even if region 53 is small, sufficient space can be obtained to press keys 55 for inputting phonetic letters. This configuration ensures accurate input of intended characters despite any inconveniences arising from the mechanism in which different positions of the key will enter different characters. Hence, character-input keys 55 provide an easy-to-operate characteristic.

A dome switch is used in Embodiment 1. However, a touch panel may be installed on the character-input keys. A touch panel can sense the position on the key that is pressed; therefore, multiple Latin letters that correspond to different pressing positions on character-input key 55 can be entered.

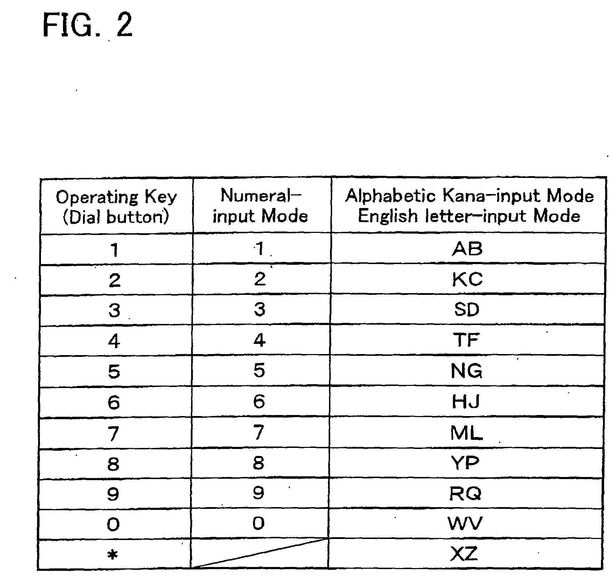

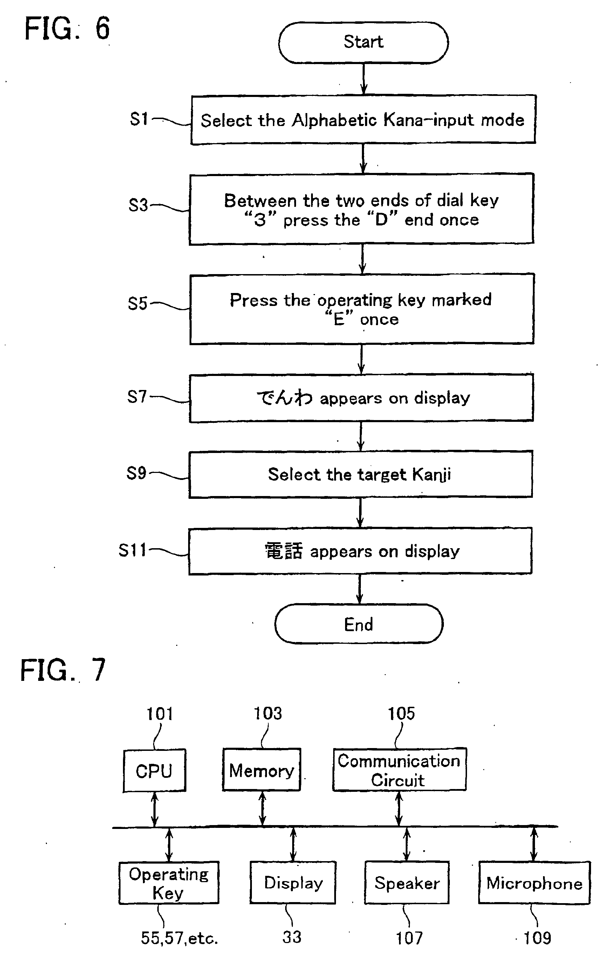

Next, the procedure for using the cell phone 1 to input " 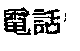 " as expressed by the Chinese-derived characters called Kanji (hereinafter referred to as "Kanji") will be explained with reference to Figures 1-6. Figure 6 is a flow chart illustrating this operation. First, a user presses operating key 63 of cell phone 1 as many times as necessary to enter the Kana mode (Step S1). Then, the user presses operating key 61 to select the uppercase or lowercase mode for displaying the phonetic letters. Here, the mode is selected to display the phonetic letters in the uppercase.

Next, of the first and second ends of the key marked "3", press the first end marked "D" once (Step S3). "D" is thus input and appears on display 33. If the lowercase mode is selected, "d" will appear on display 33. Then, press the key 57 marked "E" once (Step S5). The character "E" is thus entered. The accumulated input "DE" is first converted to Hiragana by a program embedded in cell phone 1 for converting words entered in the form of Latin letters into Japanese words such that " 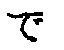 " " appear in Hiragana on display 33. Once " 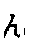 " and " 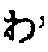 " are input in the same manner as " 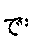 ", the word " 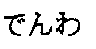 " appears in the Hiragana on display 33 (Step S7).

Next, press operating key 69 which operates as a function key to activate the Kanji character conversion program embedded in cell phone 1. Then, press operating key 67, which functions as a scroll key; then, the candidates expressed as different Kanji characters appear on display 33. When the Kanji characters to be converted appear on display 33, press operating key 69 to select the target Kanji (Step S9). Thus, " 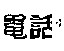 " [which means "telephone" in English] expressed in kanji appears on display 33 (Step S11).

Any voiced sound, semi-voiced consonant or p-sound, double consonant, or a macron can be entered in the same manner in which Kana characters [the two parts of Japanese Kana characters which are the phonetic expression of the Japanese words] are entered by using Latin letters. If the user wants the Katakana characters to appear on the display, he or she can convert the input Hiragana into Katakana by pressing operating key 61 as many times as required.

An English message or English letters can be entered in the following manner: a user presses operating key 63 as many times as required to select the English-input mode. Then, the user presses operating key 61 to select either uppercase or lowercase [mode], and then, presses character-input keys 55, 57 to enter a message in English or English letters in the same manner that the user would enter alphabetic Kanas. Alternatively, in the alphabetic Kana-input [mode], the target English letter or Latin letter may be entered, followed by the selection of uppercase or lowercase mode by pressing operating key 61.

As described, any Japanese word can be input by a single pressing of the operating keys constituting the Latin letters in Embodiment 1. That is, any Japanese word can be entered using phonetic letters in the same manner that a user would enter Japanese words using a keyboard of a personal computer. This operation, therefore, is similar to the keyboard operation of any personal computer, and this familiar key operation prevents input errors, and shortens the time required for inputting and learning the operation.

Character-input keys 55 are arranged such that the longitudinal axes of the keys thereof are tilted from northeast to southwest. This configuration allows a right handed user to move the thumb of his or her right hand in a nearly horizontal fashion to press the character-input keys. The operability of the keys is thus improved. To accommodate a left handed user who uses this cell phone with his or her left hand, the longitudinal axes of the character-input keys 55 may be tilted from northwest to southeast.

Figure 7 illustrates an example of a hardware configuration that can realize cell phone 1 of Embodiment 1. CPU 101 computes the character data that is input thereto. Various programs used for inputting characters are stored in Memory 103 wherein the programs include the one that converts the alphabetic input into Japanese [Kana] characters and the one that converts Hiragana into Kanji. The programs and CPU 101 together constitute the Latin letter-Japanese conversion means. Memory 103 can store names and phone numbers of the user's choice or the contents of the message being sent or received. Communication Circuit 105 is an electric circuit that executes communications for cell phone 1. The CPU 101, Memory 103, and Communication Circuit 105 are mounted on the printed circuit board inside first casing 3 or second casing 5 as illustrated in Figure 1. Other elements of the hardware configuration of cell phone 1 include character-input keys 55, 57, and similar keys, a display 33, a speaker 107, and a microphone 109, and the like.

### EMBODIMENT 2

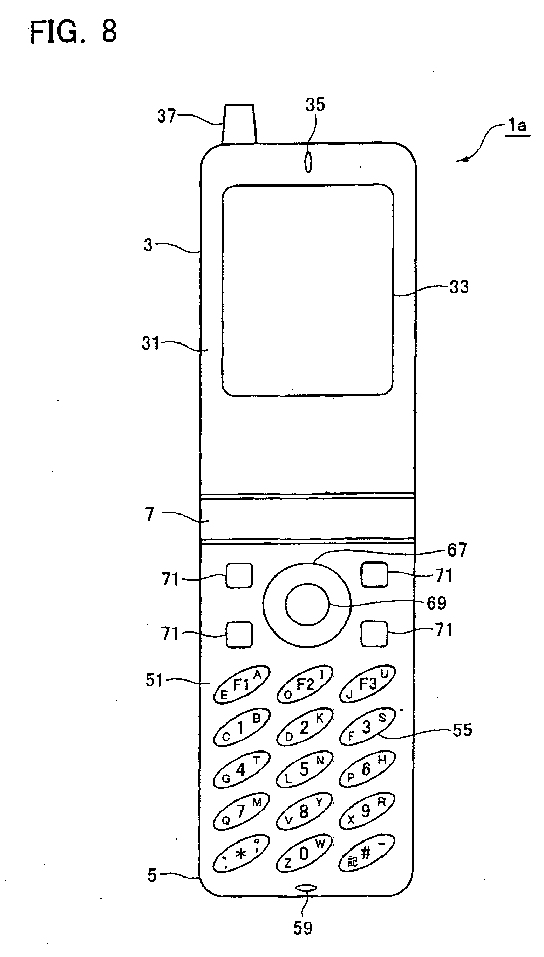

The cell phone of Embodiment 2 is described herein focusing on the elements that are different from Embodiment 1. Those symbols that are found in the figures depicting Embodiment 2 and refer to the same components in the figures depicting Embodiment 1 are not described herein. Figure 8 is a top view illustrating the external appearance of cell phone 1a of Embodiment 2. Cell phone 1a has character-input keys 55 designating characters on the first end, second end, and center of each of the keys 55. In this way, the number of characters a user can enter by pressing a single character-input key 55 is increased. The details of Embodiment 2 are described herein.

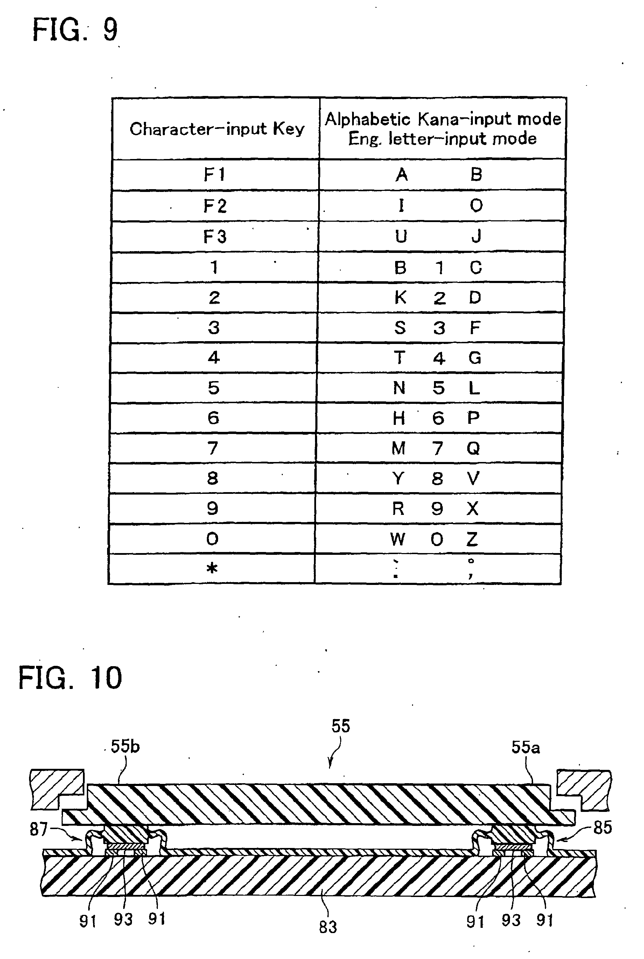

In Embodiment 2, operating keys 61, 63, 65 are arranged to be three character-input keys 55 illustrated in Figure 1. As a result, there are 15 character-input keys 55 in total. For the alphabetic Kana-input mode or English mode, two or three characters are assigned to each of the character-input keys 55 as illustrated in Figure 9. The common characters are shared between the Latin letter mode and English mode. However, if "*" is entered in the alphabetic Kana-input mode, a Japanese period "ₒ " or Japanese comma ", " are entered; in the English-input mode, an English period "." or English comma "," are entered.

Characters are assigned to the first and second ends of each of the character-input keys 55. In addition, the numerals "0" ~ "9" are assigned to the center thereof. As illustrated in Figure 10, the operation of pressing the center of character-input key 55 causes movable contacts 93 at first end 55a and second end 55b to touch fixed contacts 91 (third contact example). Then, both dome switches 85, 87 are turned on, thereby inputting the character assigned to the center of character-input key 55. Any kind of input is prohibited under this condition in Embodiment 1.

Now, if a user presses the center of character-input keys 55 that correspond to "F1", "F2", and "F3", no character input will be allowed while these keys allow a user to perform the same operation as he or she is allowed by pressing operating keys 61, 63, 65. If a user presses the center of character-input key 55 that corresponds to "*", no character input will be allowed. In Embodiment 2, character-input key 57 of Figure 1 is eliminated by increasing the number of character-input keys 55.

According to Embodiment 2 previously described, the use of the center point on the character-input key for numerals allows a user to input any numeral without switching from the alphabetic Kana-input mode or the English character-input mode that is currently in use to the numeral-input mode. Hence, characters can be entered more efficiently.

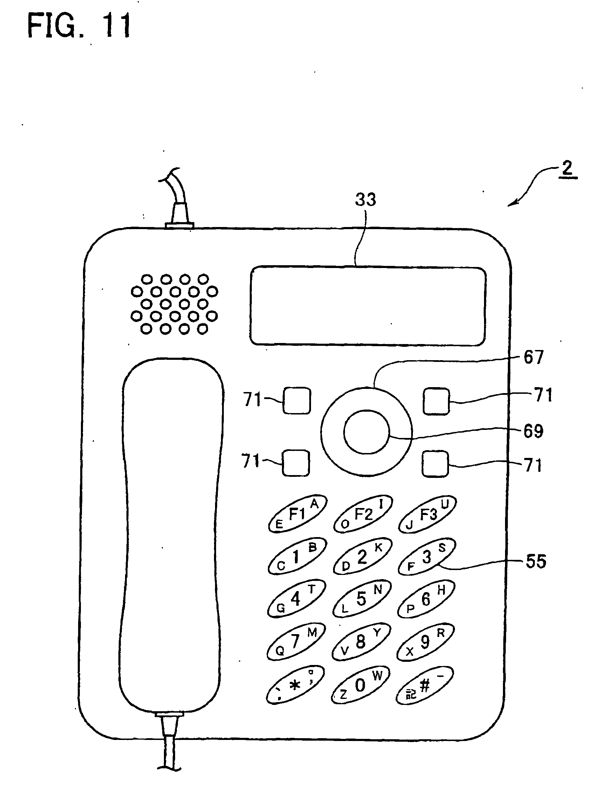

The present invention may be applied not only to hand-held electric devices but also to other electronic apparatus such as a fixed phone. This is described as an alternative to Embodiment 2. Figure 11 is a top view illustrating the external appearance of a fixed phone of the alternative embodiment. Fixed phone 2 provides the same effect as cell phone 1a.

As described above, the electronic apparatus of the present invention allows a user to enter each of the phonetic letters by a single pressing operation with a minimal increase in the number of character-input keys. With this single-pressing operation, the user does not need to count the number of times a key must be pressed when entering a character.

In addition, tilting of the character-input keys in the longitudinal direction provides the large space required for arranging large-sized character-input keys along the longitudinal direction. Therefore, even though the area for the character-input keys is small, the space a user needs for pressing the character-input keys is ensured. Even if different characters are input in accordance with the points of pressing on a character-input key, a user can enter the intended character accurately, and the operability of the character-input keys is improved.

## Claims

1. An electronic apparatus comprising:
- an input means having character-input keys assigned to a matrix configuration wherein said character-input keys having different vertical and horizontal widths; the longitudinal axes of said character-input keys being tilted in a top view; said character-input keys having first and second contacts to input different characters; said first and second contacts being provided on first and second ends of said character-input keys in the longitudinal direction; and
- a display means for displaying the characters input by said character-input keys of said input means.

2. The electronic apparatus as set forth in Claim 1 wherein said character-input keys are arranged in such a manner that the longitudinal axes of said character-input keys is tilted from northeast to southwest.

3. The electronic apparatus as set forth in Claims 1 or 2 wherein said characters assigned to each of said ends of said character-input keys are phonetic letters.

4. The electronic apparatus as set forth in Claim 3 having a Latin letter-Japanese character conversion means for converting the words expressed by using phonetic letters, which are entered by said character-input keys, into Japanese words.

5. The electronic apparatus as set forth in any one of Claims 1-4 wherein said electronic apparatus comprises third contacts that are capable of contacting said first contacts and said second contacts provided on said first and said second ends of said character-input keys; and third characters different from those assigned to said first and second ends are assigned to the center of said character-input keys wherein said first contacts and said second contacts touch said third contacts, thereby inputting said third characters assigned to the center of said character-input keys.

6. The electronic apparatus as set forth in Claim 5 wherein said characters allocated to the center of said character input keys are numerals.

7. The electronic apparatus as set forth in any one of Claims 1-6 wherein said electronic apparatus is of a hand-held type.
